# FASCICULE DE BREVET EUROPEEN

(11) **EP 0 696 989 B1**
(45) Date de publication et mention de la délivrance du brevet: **28.07.1999**
(21) Numéro de dépôt: 94916265.5
(22) Date de dépôt: 10.05.1994
(51) Int. Cl.: B65D 19/32, B29C 65/20

(54) **PALETTE DE MANUTENTION EN MATIERE PLASTIQUE ET PROCEDE DE FABRICATION**
KUNSTSTOFFPALETTE UND VERFAHREN ZU IHRER HERSTELLUNG
PLASTIC HANDLING PALLET AND MANUFACTURING METHOD

(30) Priorité: 10.05.1993 FR 9305564
(43) Date de publication de la demande: 21.02.1996
(73) Titulaire: Delacour, Frederic, F-37000 Tours (FR)
(72) Inventeur: Delacour, Frederic, F-37000 Tours (FR)
(74) Mandataire: Kügele, Bernhard
(86) Numéro de dépôt international: FR9400555
(87) Numéro de publication internationale: WO9426600

(56) Documents cités:
- DE-A- 2 652 702
- FR-A- 1 543 637
- FR-A- 2 110 348
- GB-A- 1 420 222
- NL-A- 9 102 161
- US-A- 2 371 106
- US-A- 3 604 368
- US-A- 3 680 496

## Description

La présente invention a trait à une palette de manutention comportant un plancher sur la surface supérieure de laquelle on peut déposer un produit à manier et reposant au-dessus d'une surface de repos. Elle concerne aussi son procédé de fabrication. Elle trouve application dans la manutention de produits d'industries à exigences hygiéniques élevées comme les industries agro-alimentaires, les industries pharmaceutiques, cosmétiques et industries aux technologies "propres".

Sont connues un grand nombre de palettes de manutention telles que décrites dans la norme française homologuée N° NF H 50-001 comportant un plancher supérieur qui repose sur trois chevrons qui laissent suffisamment de lumière entre eux pour permettre l'introduction de fourches des machines de manutention.

Ce type de palettes couramment utilisées pour le transport et le stockage de matériaux et de marchandises de toutes sortes, sont traditionnellement fabriquées en bois de façon à réaliser le plancher en un certain nombre de planches parallèles avec ou sans espace entre elles, planches qui sont clouées généralement sur trois traverses essentiellement de même épaisseur que les planches du plancher, traverses qui sont disposées en alignement des deux extrémités de chaque planche respectivement ainsi qu'au milieu entre ces extrémités.

En-dessous de ces traverses se trouvent les chevrons qui peuvent être exécutés en poutrelles massives ou, pour réduire le poids et le coût de ces palettes, les chevrons peuvent être exécutés en un nombre de plots individuels pour chaque chevron.

En-dessous des plots peuvent s'étendre de façon parallèle aux planches du plancher, des planches inférieures qui relient les plots de chaque chevron du coté opposé à leurs côtés qui sont reliés aux traverses.

La prévision des planches inférieures augmente la stabilité des chevrons exécutés en plots séparés.

Ce type de palettes a donné entièrement satisfaction quant au transport et au stockage d'un grand nombre de matériaux et marchandises variés. Toutefois, pour des raisons d'hygiène le bois et en particulier la façon de connexion des différents planches, traverses et plots, n'est pas acceptable pour la manutention de produits alimentaires non emballés. En effet, la surface du bois ainsi que les interstices qui existent forcément entre les planches qui sont clouées ensemble, ne permettent pas un nettoyage absolument hygiénique de ces palettes car des microbes s'installent et prolifèrent dans les interstices ainsi que dans la surface du bois lui-même.

Il a été proposé de produire des palettes de cette sorte en un matériau autre que le bois qui permet un nettoyage de sa surface impeccable. Toutefois, reste le problème de la prolifération des microbes dans les interstices entre les planches qui ne peut pas être éliminé par un changement de la nature du matériau simplement.

On connaît par exemple par le document US-A-2.371.106 une palette dont le plateau est constitué de plusieurs planches maintenues ensembles par des traverses fixées aux planches par des moyens d'encastrement. Les éléments de la palette, c'est-à-dire les planches et les traverses peuvent être en un matériau plastique. Le maintien des éléments de la palette par des moyens d'encastrement implique cependant automatiquement des alvéoles aux jointures des éléments.

Pour résoudre ce problème restant, il a été proposé de fabriquer des palettes de manutention pour usage pour des produits alimentaires en une forme géométrique identique à celle décrite ci-dessus à l'exception que le plancher ne consiste pas en une pluralité de planches parallèles mais en un seul plateau, cette palette étant fabriquée par moulage en polyéthylène autour d'une armature métallique ou en bois, entièrement immergée dans le polyéthylène.

Lors de l'utilisation de ce type de palettes durant des cycles répétitifs d'utilisation séparés par des cycles de nettoyage, on a trouvé que l'incompatibilité des propriétés physiques comme la dilatation thermique ou la rigidité des matériaux de l'armature et du plastique moulé est telle qu'après un certain nombre de cycles d'utilisation, des fissures se forment à certains endroits stratégiques de la palette, fissures qui produisent de nouveau des endroits propices à la prolifération des microbes sans permettre leur nettoyage car ces fissures sont trop fines pour permettre un nettoyage efficace.

On connaît par le document GB-A-1.420.222 une palette de manutention comportant un plancher écarté d'une surface de repos de façon à laisser passer un organe de préhension comme une fourche de chariot élévateur. Cette palette comporte un plancher réalisé en un matériau plastique comme du polyéthylène et un moyen d'écartement à la surface de repos, réalisé en matériau plastique comme du polyéthylène.

On connaît par le document US-A-3.680.496 une palette de manutention stérilisable en matière plastique où le moyen d'écartement est solidarisé au plancher par un procédé de fusion.

La présente invention a pour but de pallier les inconvénients de l'art antérieur et de créer une palette où l'assemblage du moyen d'écartement à la surface inférieure en regard du plancher est réalisé par un procédé de polyfusion qui est tel que les chaînes moléculaires des deux pièces en contact sont reconstituées et que la zone périphérique de l'interface entre les deux pièces soit complètement étanche, qui peut être fabriquée à un coût raisonnable, c'est-à-dire moins cher que les palettes injectées, et qui répond à toutes les exigences hygiéniques de l'industrie alimentaires, en particulier qu'il n'existe plus de possibilité d'interstices dans lesquels pourraient croître les bactéries et proliférer les microbes.

En outre, le type de palettes que l'on cherche à réaliser par l'invention doit être produit par un procédé permettant facilement des variations des dimensions pour l'adapter aux changements des exigences de l'utilisateur. Une telle adaptation n'est que difficilement possible avec des palettes injectées, et seulement pour un coût élevé.

Selon la présente invention, une telle palette comporte un plancher réalisé en un matériau plastique comme du polyéthylène ou du polypropylène écarté d'une surface de repos de façon à laisser passer un organe de préhension comme une fourche de chariot élévateur et un moyen d'écartement à la surface de repos réalisé en matériau plastique comme du polyéthylène ou du polypropylène. Le plancher et le moyen d'écartement à la surface de repos sont réalisés en un matériau plastique plein de façon à ne pas laisser d'alvéole en cas de brisure par un objet contondant. L'invention se caractérise en ce que le moyen d'écartement est solidarisé au plancher par un procédé de polyfusion de façon à ce qu'il ne subsiste aucun interstice entre le moyen d'écartement et le plancher qui débouche à l'extérieur, en ce que la fusion est exécutée de façon à constituer une continuité des chaînes organiques des deux surfaces assemblées, et en ce que la zone de solidarisation comporte un cordon périphérique constituant une bordure étanche le long de celle-ci.

Selon un autre aspect de l'invention, le moyen d'écartement comporte une pluralité de plots directement solidarisés à la face inférieure du plancher.

Selon un autre aspect de l'invention, le moyen d'écartement comporte aussi une pluralité de chevrons directement solidarisés chacun à une pluralité d'extrémités libres de plots.

Selon un autre aspect de l'invention, les chevrons sont disposés de façon à constituer une ceinture continue.

Selon un autre aspect de l'invention, les plots sont constitués chacun par l'une des formes suivantes, seule ou en combinaison :
- plaque épaisse plane;
- volume plein et massif comme un cube plein;
- plaque incurvée à simple concavité;
- plaque incurvée à ramifications.

Selon un autre aspect de l'invention, la palette comporte un moyen de gerbage tel que le plancher comporte à sa face supérieure un moyen destiné à recevoir un moyen complémentaire disposé sur la surface inférieure du fond du moyen d'écartement d'une palette destinée à être gerbée sur la palette.

Selon un autre aspect de l'invention, le moyen de gerbage disposé sur la surface supérieure du plancher est constitué par une pluralité de plaques en saillie à l'intervalle entre lesquels vient se placer une partie correspondante du moyen de gerbage sur le fond du moyen d'écartement suivant.

Selon un autre moyen de l'invention, le moyen de gerbage disposé sur la surface supérieure du plancher est constitué par une pluralité de dépressions à l'intérieur desquelles viennent se placer une partie d'extrémité correspondante du moyen de gerbage sur le fond du moyen d'écartement suivant.

Selon un autre moyen de l'invention, la surface supérieure du plancher comporte un gaufrage formé par un procédé d'impression thermique et/ou une microperforation.

Selon un autre aspect de l'invention, le moyen de gerbage comporte un gaufrage pratiqué sur la surface inférieure du fond du moyen d'écartement, gaufrage inférieur adapté à retenir la palette suivante par le gaufrage de la surface supérieure de son plancher, adapté à retenir et empêcher les déplacements horizontaux dans les deux axes de la palette suivante par le gaufrage.

L'assemblage du plancher et des chevrons est effectué par un procédé comportant une étape de fusion de la matière au niveau des parties des éléments de la palette susceptibles d'être posées l'une contre l'autre, fusion qui est obtenue par une technique de chauffage par miroir chauffant ou par soudage par vibration linéaire ou par soudage à micro-ondes ou à ultrasons.

De façon avantageuse, les palettes selon l'invention peuvent être traitées après la polyfusion du plancher et du moyen d'écartement à la surface de repos par une étape de traitement supplémentaire qui enlève les bavures de la polyfusion.

La présente invention a trait également à un procédé de fabrication d'une palette comme décrite ci-dessus, procédé qui comporte les étapes suivantes :
- préparation des éléments individuels d'une palette à partir des plaques et/ou des barres en polyéthylène ou polypropylène par coupage, ou par moulage;
- chauffage jusqu'à la fusion de parties de surface de ces éléments, parties qui sont destinées à être reliées à des parties également chauffées d'autres éléments;
- mise en face d'au moins une première partie chauffée et d'au moins une seconde partie chauffée;
- application d'une pression prédéterminée entre les deux éléments dont les deux parties chauffées respectivement ont été mises en face l'une de l'autre;
- refroidissement des parties chauffées sous maintien de ladite pression.

De façon avantageuse, le procédé selon l'invention peut comporter également une étape d'enlèvement des bavures formées par l'application de pression contre les parties chauffées.

Typiquement, la température à laquelle les parties de surface sont chauffées est comprise entre la gamme de 100 à 300°C.

L'invention va maintenant être décrite plus en détail en se référant aux dessins dont :
La figure 1 : une vue en perspective d'un premier mode de réalisation d'une palette selon l'invention;
La figure 2 : une vue de dessous de la palette de la figure 1;
La figure 3 : une vue en perspective d'un autre mode de réalisation d'une palette selon l'invention;
La figure 4 : une vue de dessous d'un autre mode de réalisation d'une palette selon l'invention;
La figure 5 : une vue de côté d'un mode de réalisation de la palette de l'invention permettant la superposition ou le gerbage de palettes selon l'invention;
La figure 6 : une vue d'un autre mode de réalisation de palettes destinées à réaliser le gerbage;
Les figures 7 à 9 : des vues de dessous de détail de palettes selon l'invention;
Les figures 10 et 11 : des vues en coupe partielle représentant deux étapes d'assemblage de parties de l'invention;
La figure 12 : une vue d'un autre mode de réalisation de palettes destinées à réaliser le gerbage;
La figure 13 : une vue de la surface supérieure du plancher d'une palette selon l'invention;
La figure 14 : un détail de la surface supérieure d'une palette selon l'invention permettant son gerbage; et
La figure 15 : un schéma représentatif d'une étape de fabrication de la palette selon l'invention, étape qui concerne la technique de fusion par miroirs chauffants.

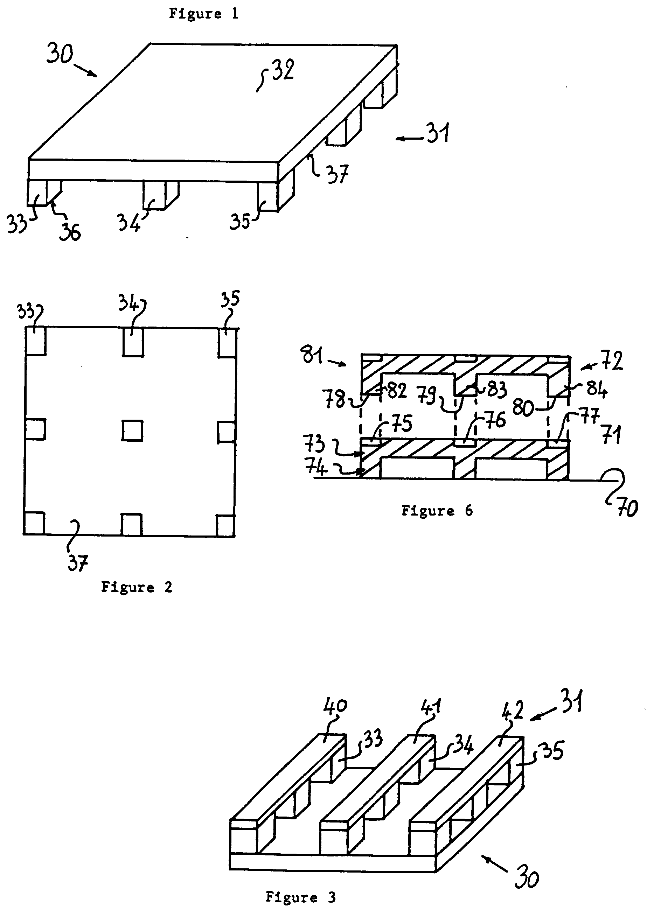

A la figure 1 on a représenté un premier mode de réalisation d'une palette de manutention selon l'invention. D'une manière générale, les palettes de manutention de l'invention comportent un plancher 30 qui est écarté du sol ou de toute surface de repos convenable par un moyen d'écartement 31 à la surface de repos. Le moyen d'écartement 31 à la surface de repos est constitué par des éléments espacés présentant des lumières suffisantes de façon à permettre le passage de la fourche d'un chariot élévateur ou de toute autre machine de manutention.

L'un des problèmes résolus par l'invention est celui selon lequel le choc entraîné par le contact entre la fourche d'un chariot élévateur lancé à pleine vitesse sur le moyen d'écartement de la palette chargée est tel que les plots réalisés en matériau plastique creux éclatent et présentent de ce fait des alvéoles ou des fissures à l'intérieur desquelles se développent les bactéries et microbes d'une part, et des poches qu'il est extrêmement difficile de nettoyer et d'aseptiser sans prendre de moyens considérables.

A cet effet, l'invention utilise un matériau plastique plein, et des formes telles qu'en cas de rupture il n'apparaisse pas d'interstices ni d'alvéoles défectives au point de vue des exigences hygiéniques des industries auxquelles la palette est destinée.

A la figure 1, le plancher 30 présente une face ou surface supérieure 32 sur laquelle est déposé le produit à manipuler. Un tel produit peut être constitué par des fromages ou encore par des quartiers de viande non emballés par exemple. La face ou surface inférieure du plancher 30 est repérée 37 à la figure 1 et à la figure 2, et porte un moyen d'écartement 31 constitué par une pluralité de plots 33-35 dont la surface inférieure du fond 36 est fermée puisque le matériau est plein. Cette surface sert à poser la palette sur la surface de repos comme le sol.

A la figure 2, on a représenté une vue de dessous de la palette de la figure 1, et on remarque la constitution de trois plots en trois rangées rectilignes.

Préférentiellement, le plancher est constitué par une plaque plane de forme rectangulaire. Toute plaque pleine peut être utilisée, de manière à ce qu'elle ne présente pas d'interstice ou d'alvéole qui soit impossible ou difficile de nettoyer.

L'assemblage du moyen d'écartement 31 à la surface inférieure en regard 37 du plancher 30 est réalisé par un procédé de polyfusion qui est tel que les chaînes moléculaires des deux pièces en contact sont reconstituées et que au moins, la zone périphérique de l'interface entre les deux pièces soit complètement étanche. De ce fait, il n'existe plus de possibilité d'interstices dans lesquels pourraient croître les bactéries et proliférer les microbes.

A la figure 3, on a représenté une vue en perspective d'un autre mode de réalisation d'une palette selon l'invention. A la figure 3, la palette a été représentée renversée et elle comporte les mêmes éléments que ceux de la palette des figures 1 et 2. Ces éléments portent les mêmes numéros de référence, les plots 33-35 sont reliés par leur surface extérieure libre par des chevrons ou planches respectivement 40, 41 et 42 qui sont disposés parallèlement à une direction du plancher comme un de ses côtés. Les chevrons sont constitués par des plaques de forme rectangle en matériau plastique plein et ils sont solidarisés par un procédé de polyfusion tel qu'il a été décrit ci-dessus.

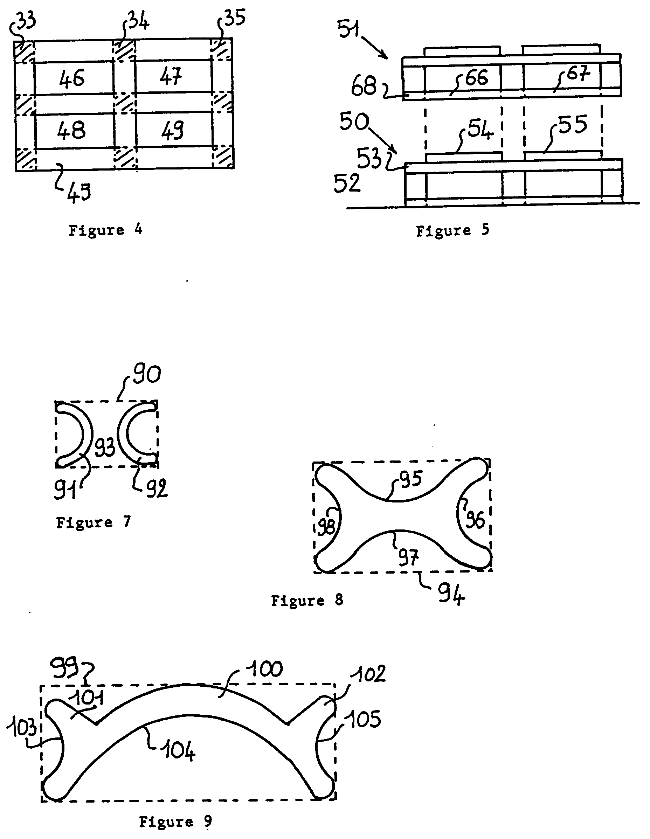

A la figure 4, on a représenté une vue de dessous d'un troisième mode de réalisation d'une palette de manutention selon l'invention. La palette du mode de réalisation de la figure 4 reprend les éléments de la figure 1 mais les complète par une ceinture 45. La ceinture 45 est dans un mode préféré de réalisation réalisée par une plaque plane en matériau plastique plein, qui a été percée de quatre ouvertures carrées respectivement 46 à 49 de sorte que les plots comme 33 à 35 soient connectés ensemble par la face supérieure non visible au dessin, de la plaque ou ceinture 45. A la figure 4, on a représenté en tirets et avec des hâchures la zone occupée par chacun des plots collés sur la face supérieure de la plaque 45. A la figure 4, est visible la face inférieure du fond du moyen d'écartement de la palette représentée.

A la figure 5, on a représenté une vue d'assemblage ou de gerbage de plusieurs palettes 50 et 51 selon l'invention. Une palette 50, ici réalisée selon le mode de réalisation de la figure 4, est posée sur une surface de repos 52 comme le sol d'un entrepôt. La palette est vue de côté. Son plancher 53 porte des plaques respectivement 54 et 55 qui sont destinées à venir s'insérer dans les ouvertures respectivement 66 et 67 de la palette suivante 51, ouvertures pratiquées dans la ceinture 68 de ladite seconde palette 51. La ceinture 68 est donc dimensionnée de façon à s'adapter aux plaques 54 à 55 disposées sur la surface supérieure 32 du plancher 30. Dans un tel mode de réalisation la surface supérieure 32 du plancher 30 de la palette de l'invention comporte donc quatre plaques en excroissance de hauteurs sensiblement égales à l'épaisseur de la ceinture du moyen d'écartement de façon à permettre l'empilement ou gerbage de plusieurs palettes qu'il est ainsi possible de ranger, de stocker et de transférer dans des points désirés de l'entrepôt de manutention.

Les plaques 54 et 55 peuvent être obtenues par collage, soudage ou polyfusion de plaques séparées sur la surface plane d'un plancher plan 30 comme celui de la figure 1. Dans un autre mode de réalisation, les plaques 54 sont obtenues par enlèvement de matière grâce à un usinage de la face supérieure 32 du plancher 30 de chaque palette.

A la figure 6, on a représenté un autre mode de réalisation d'un moyen de gerbage selon l'invention. D'une manière générale, les moyens de gerbage de l'invention comportent un moyen disposé sur la face ou surface inférieure du fond du moyen d'écartement à la surface de repos de la palette précédente. Ce moyen est conformé pour s'adapter à un moyen réciproque pratiqué sur la surface supérieure du plancher de la palette qui lui sert de surface de repos dans le gerbage.

A la figure 6, on a représenté un moyen de gerbage adapté notamment aux palettes du mode de réalisation de la figure 1. On a représenté une surface de repos comme le sol 70 et deux palettes successives 71 et 72 qui sont chacunes constituées par un plancher 73 et un moyen d'écartement 75 constitué par une pluralité de plots. La surface supérieure du plancher 73 de la palette 71 est munie d'une pluralité de dépressions respectivement 75, 76 et 77 à l'intérieur desquelles viennent se placer une partie d'extrémité respectivement 78 à 80 du moyen de gerbage disposé sur le fond du moyen d'écartement 81 de la palette suivante 72. Ici, le moyen de gerbage disposé sur le fond du moyen d'écartement suivant 81 est directement constitué par la surface d'appui 78 à 80 des plots respectivement 82 à 84 du moyen d'écartement 81.

Il est clair que pour améliorer le gerbage, les dépressions du mode de réalisation de la figure 6 ainsi que les surfaces latérales du fond des moyens d'écartement peuvent présenter des pentes destinées à centrer l'approche de la palette suivante sur la palette support.

La même disposition de pente peut être envisagée aussi dans le moyen de gerbage représenté à la figure 5 et précédemment décrite.

Aux figures 7 à 9, on a représenté trois modes de réalisation de plots pleins destinés au moyen d'écartement de l'invention. D'une manière générale, le plot de l'invention est constitué par une plaque pleine. Cette plaque pleine peut être de forme allongée, mais peut aussi être constituée par un plot plein comme un cube ou un parallélépipède rectangle. D'autres formel ont été étudiées qui s'adaptent particulièrement au fait que les fourches des machines de manutention présentent un danger pour la palette. A cet effet, on a prévu des profils de plots pleins qui assurent une déviation relative du mouvement de la fourche lors de son insertion dans le moyen d'écartement.

Parmi ces formes, on a représenté des formes courbes comme celles de la figure 7. Le plot 90 de la figure 7 est inscrit dans une section rectangulaire représentée en tirets. Il est constitué de deux plaques conjointes 91 et 92 qui présentent une forme en "C". L'espace 93 entre les deux formes 91 et 92 est destiné à permettre que le plot reçoive sur plusieurs points le choc éventuel de la fourche d'une machine de manutention.

A la figure 8, on a représenté un autre mode de réalisation d'un plot inscrit dans un parallélépipède 94 et qui présente une forme en "X" constituée par quatre courbes extérieures respectivement 95 à 98.

A la figure 9, on a représenté un troisième mode de réalisation d'un plot destiné à une palette de manutention selon l'invention.

Le plot 99 est inscrit lui aussi dans une section rectangulaire et présente une forme en "V" inversé 100 doté de deux ramifications sensiblement perpendiculaires 101 et 102 de façon à présenter trois creux respectivement 103, 104 et 105 qui sont accessibles de l'extérieur de la palette et qui servent à recevoir un choc éventuel de la fourche sur plusieurs points.

Les formes qui ont été sélectionnées aux figures 7 à 9 ont été trouvées comme ayant aussi la meilleure tenue mécanique notamment dans le procédé de polyfusion avec la surface inférieure du plancher ou avec la surface supérieure des chevrons ou des ceintures des moyens d'écartement de l'invention.

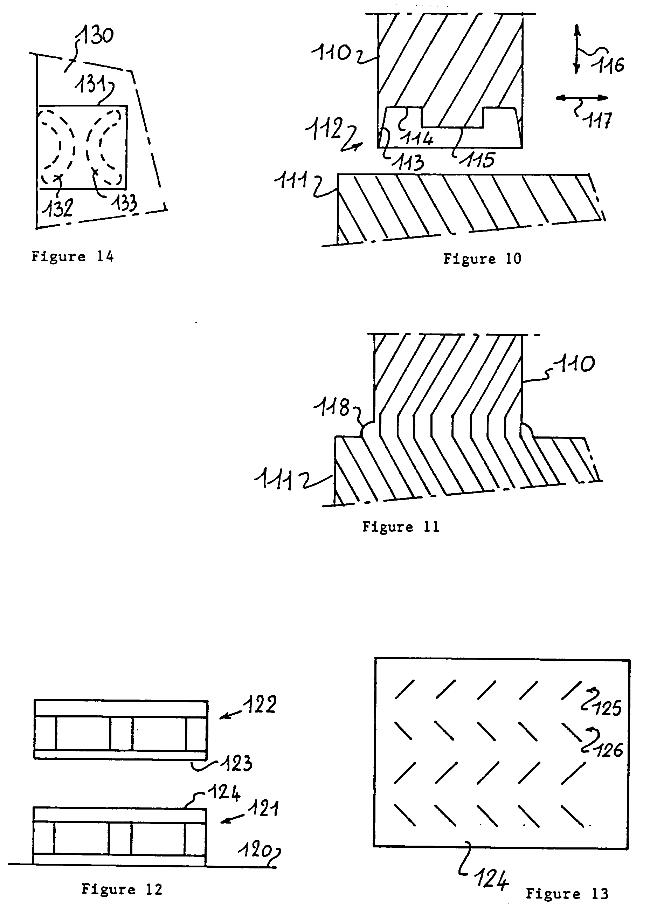

Aux figures 10 et 11, on a représenté un mode de réalisation particulier permettant une polyfusion par un procédé de friction mécanique.

A la figure 10, on a représenté une section d'une première pièce 110 comme par exemple un plot, et la section d'une seconde pièce 111 comme un plancher. L'extrémité 112 de la pièce 110 présente un rebord 113 latéral qui est destiné à entourer entièrement la surface de liaison entre les deux pièces. Un creux 114 est prévu ainsi qu'une excroissance 115. Les deux pièces sont approchées par pression selon la direction 116 et sont mises par une machine spéciale, qui n'est pas directement concernée par l'invention et qui n'est ni représentée ni plus décrite, qui fait entrer les pièces en vibration relative selon les directions 117. En choisissant des pressions et des accélérations de vibration convenables, on obtient une parfaite fusion des zones en contact des pièces 110 et 111 ainsi qu'il a été représenté en coupe à la figure 12. Le cordon 118 périphérique est obtenu par la fusion de l'excroissance latérale 113 de la pièce 110 initiale et permet d'assurer une parfaite étanchéité de la liaison des deux pièces. Un autre avantage de cette disposition est de permettre d'éviter la présence d'interstices dans le procédé de fusion entre les deux pièces.

A la figure 12, on a représenté un autre moyen de gerbage selon l'invention. Dans cette disposition, on a représenté sur une surface d'appui comme le sol 120 deux palettes de manutention respectivement 121 et 122 en cours de gerbage. Les palettes sont constituées par des palettes selon les modes de réalisation notamment des figures 2 et 3 dans lesquelles les moyens d'écartement sont reliés par leur face inférieure par des chevrons ou une ceinture. La surface supérieure du plateau de palette est munie ou dotée d'un gaufrage obtenu par un procédé d'impression thermique, qui n'est pas directement concerné par l'invention, et qui permet d'augmenter le coefficient de frottement de cette surface par rapport à toute autre matière. Une telle disposition est en soi avantageuse, non seulement dans le cas du gerbage, mais aussi pour le transport de produits qui, lors d'accélérations du chariot de manutention pourraient par leur simple gravité et leur inertie, retomber sur le sol. Le gaufrage peut aussi avantageusement être utilisé comme moyen de gerbage. A cet effet, la surface inférieure 123 du plateau suivant 122 est elle aussi munie d'un gaufrage réciproque non visible au dessin, et qui est destiné à venir s'adapter sur le gaufrage de la face supérieure 124 du plancher de la palette 121. Par cette disposition, les palettes restent fixées les unes aux autres malgré des accélérations latérales, gauffrage adapté à retenir et empêcher les déplacements horizontaux dans les deux axes de la palette suivante par le gaufrage.

A la figure 13, on a représenté la surface supérieure 124 du plancher d'une palette de manutention munie d'un gaufrage. Le gaufrage est ici constitué par des perforations sur une faible profondeur de l'ordre de quelques millimètres et qui affectent la forme de chevrons respectivement 125 dans une première orientation et 126 dans une seconde orientation. Les chevrons sont alignés selon des directions parallèles à un côté du plancher. Le gaufrage est obtenu en faisant rouler un cylindre muni de picots d'une forme adaptée aux chevrons 125 et 126, que l'on fait chauffer et qui se déplace avec une pression et une vitesse déterminées le long de la direction désirée représentée à la figure 13.

Dans un autre mode de réalisation de l'invention, de façon à donner de meilleures qualités à la palette, au point de vue de l'hygiène notamment mais aussi de qualité d'aération du produit, le plancher peut être muni de microperforations.

A la figure 14, on a représenté un mode de réalisation d'un moyen de gerbage selon l'invention. A la figure 14, on a représenté la surface supérieure 130 d'un plancher d'une palette selon l'invention, et qui est dotée d'une dépression 131 à l'intérieur de laquelle vient se loger le fond ou la surface inférieure du fond d'un moyen d'accrochage constitué par des pieds ou plots selon l'un des modes de réalisation des figures 7 à 9. On a représenté en tirets la face de contact par exemple d'un plot selon la figure 7 où l'on aperçoit la trace 132 et 133 représentée en tirets du plot. De ce fait, on réalise ainsi un gerbage excellent des palettes de l'invention.

Le plancher de la palette est relié de façon fixe à un moyen d'écartement à la surface de repos par un procédé de polyfusion qui produit non pas seulement une adhésion entre le plancher et le moyen d'écartement, mais effectivement une fusion de l'interface entre le plancher et le moyen d'écartement à la surface de repos afin d'éliminer de façon fiable et durable toute possibilité de création d'interstices qui pourraient être propices à la prolifération de microbes.

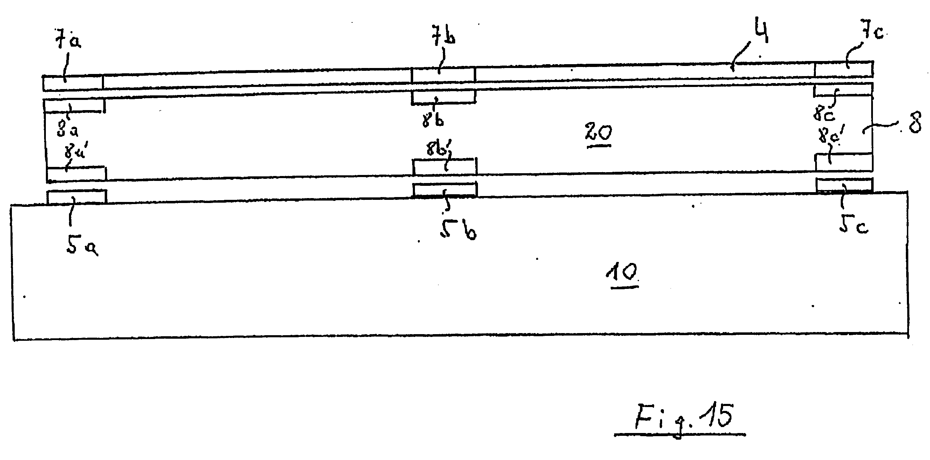

La figure 15 montre schématiquement l'exécution de la polyfusion par miroir chauffant entre un plancher 4 et trois plots 5a, 5b et 5c, du moyen d'écartement à la surface de repos qui sont arrangés sur un socle de travail 10.

Les plots 5a à 5c sont disposés sur ce socle de travail dans une orientation et un espacement qui correspond à la géométrie de la palette terminée, et un moyen de matrice chauffante 8 sera posé sur les plots 5a à 5c.

Cette matrice chauffante comporte un corps principal 20 plus ou moins isolant thermiquement. Des éléments chauffants 8a', 8b' et 8c' à la surface inférieure de ce corps principal 20 sont disposés de façon à correspondre aux emplacements des plots 5a, 5b et 5c. De la même façon, des éléments chauffants 8a, 8b et 8c sont disposés à la surface supérieure du corps principal 20 du moyen de chauffage 8 dont les emplacements correspondent également à la position des plots 5a, 5b et 5c. Le circuit d'alimentation d'énergie ainsi que la nature des éléments chauffants ne font pas partie de la présente invention et ne sont donc pas illustrés en détail.

A titre d'exemple, les éléments 5a à 5c, etc. sont en polypropylène et les parties fusionnées sont amenées à une température entre 215-235°C.

La dimension de ces éléments de chauffage 8a à 8c' s'étendant dans une direction perpendiculaire au plan de dessins correspond à la largeur du plancher 4 afin de permettre de chauffer les parties géométriquement correspondantes au croisement de la surface inférieure du plancher 4 ainsi que des plots 5a à 5c jusqu'à la fusion, après quoi la matrice de chauffage 8 est retirée et le plancher 4 est descendu afin de mettre en contact les parties chauffées du plancher 4 et les parties chauffées des plots 5a à 5c.

Ensuite, on applique une pression suffisante pour garantir que le plancher 4 soit rendu solidaire parfaitement des plots 5a à 5c au niveau des croisements de ces éléments, et on attend le refroidissement des parties chauffées en maintenant la pression afin de garantir une qualité irréprochable des interfaces de connexion des éléments et on procède ensuite optionnellement à l'enlèvement des bavures qui seront formées par l'écrasement sous pression du matériau fondu au niveau des endroits chauffés.

D'autres techniques d'assemblage par fusion partielle seront à la portée de l'homme du métier.

La présente invention a été décrite ci-dessus en se référant à une forme de réalisation seulement, étant entendu que l'invention n'est nullement limitée à la forme géométrique particulière illustrée dans les figures.

La structure supérieure du plancher peut comporter une structure gaufrée en forme d'une trame qui peut être réalisée par un procédé d'impression thermique. Le plancher peut également comporter une microperforation. Une telle palette trouvera notamment son utilisation dans l'industrie fromagère.

Bien entendu, l'invention n'est nullement limitée à la forme géométrique de la palette, notamment quant au nombre de chevrons ou de plots par chevrons.

## Revendications

1. Palette de manutention comportant un plancher (30) réalisé en un matériau plastique comme du polyéthylène ou du polypropylène écarté d'une surface de repos de façon à laisser passer un organe de préhension comme une fourche de chariot élévateur et un moyen d'écartement (31) à la surface de repos réalisé en matériau plastique comme du polyéthylène ou du polypropylène, le plancher (30) et le moyen d'écartement (31) à la surface de repos étant réalisés en un matériau plastique plein de façon à ne pas laisser d'alvéole en cas de brisure par un objet contondant, caractérisée en ce que le moyen d'écartement (31) est solidarisé au plancher (30) par un procédé de polyfusion de façon à ce qu'il ne subsiste aucun interstice entre le moyen d'écartement (31) et le plancher (30) qui débouche à l'extérieur, en ce que la fusion est exécutée de façon à constituer une continuité des chaînes organiques des deux surfaces assemblées, et en ce que la zone de solidarisation comporte un cordon périphérique (118) constituant une bordure étanche le long de celle-ci.

2. Palette selon la revendication 1, caractérisée en ce que le moyen d'écartement (31) comporte une pluralité de plots (33-35) directement solidarisés à la face inférieure (37) du plancher (30).

3. Palette selon la revendication 1, caractérisée en ce que le moyen d'écartement (31) comporte aussi une pluralités de chevrons (40-42) directement solidarisés chacun à une pluralité d'extrémités libres de plots (33-35).

4. Palette selon la revendication 3, caractérisée en ce que les chevrons sont disposés de façon à constituer une ceinture (45) continue.

5. Palette selon l'une des revendications 2 à 4 caractérisée en ce que les plots (33-35, 90, 94, 99) sont constitués chacun par l'une des formes suivantes, seule ou en combinaison :
- plaque épaisse plane;
- volume plein et massif comme un cube plein;
- plaque incurvée à simple concavité;
- plaque incurvée à ramifications.

6. Palette selon l'une des revendications précédentes, caractérisée en ce qu'elle comporte un moyen de gerbage tel que le plancher comporte à sa face supérieure un moyen destiné à recevoir un moyen complémentaire disposé sur la surface inférieure du fond du moyen d'écartement d'une palette destinée à être gerbée sur la palette.

7. Palette selon la revendication 6, caractérisée en ce que le moyen de gerbage disposé sur la surface supérieure du plancher est constitué par une pluralité de plaques (54, 55) en saillie à l'intervalle entre lesquels vient se placer une partie correspondante du moyen de gerbage ou le fond du moyen d'écartement suivant.

8. Palette selon la revendication 6, caractérisée en ce que le moyen de gerbage disposé sur la surface supérieure du plancher (73) est constitué par une pluralité de dépressions (75, 76, 77) à l'intérieur desquelles viennent se placer une partie d'extrémité correspondante (78-80) du moyen de gerbage sur le fond du moyen d'écartement suivant.

9. Palette selon la revendication 1, caractérisée en ce que la surface supérieure (124) du plancher comporte un gaufrage formé par un procédé d'impression thermique et/ou une microperforation.

10. Palette selon les revendications 6 à 9, caractérisée en ce que le moyen de gerbage comporte un gaufrage pratiqué sur la surface inférieure (123) du fond du moyen d'écartement, gaufrage inférieur adapté à retenir la palette suivante par le gaufrage de la surface supérieure (124) de son plancher (121), adapté à retenir et empêcher les déplacements horizontaux dans les deux axes de la palette suivante par le gaufrage.

11. Procédé de fabrication d'une palette selon l'une quelconque des revendications 1 à 10, caractérisé en ce qu'il comporte les étapes suivantes :
- préparation des éléments individuels d'une palette à partir de plaques et/ou de barres en matériau plastique par coupage, ou par moulage;
- chauffage jusqu'à la fusion des parties de surface de ces éléments, parties qui sont destinées à être reliées à des parties également chauffées d'autres éléments;
- mise en face d'au moins une première partie chauffée à au moins une seconde partie chauffée;
- application d'une pression prédéterminée entre les deux éléments dont deux parties chauffées respectivement ont été mises en face l'une de l'autre;
- refroidissement des parties chauffées sous maintien de ladite pression.

12. Procédé selon la revendication 11, caractérisé en ce qu'il comporte en outre l'enlèvement des bavures formées par l'application d'une pression sur les parties chauffées.

13. Procédé selon la revendication 11 ou 13, caractérisé en ce que la température à laquelle les parties de surface sont chauffées est comprise dans la gamme de 100 à 300°C.

14. Procédé selon l'une quelconque des revendications 11 à 13, caractérisé en ce que les surfaces supérieures des planches (4-4f) sont soumises à une étape d'impression thermique d'un gaufrage en forme de trame, avant la polyfusion.

15. Procédé selon l'une quelconque des revendications 11 à 14, caractérisé en ce que les planches (4-4f) subissent une étape de microperforation.

16. Procédé selon l'une quelconque des revendications 11 à 15, caractérisé en ce que la fusion des parties de surface des éléments est effectuée par application d'une technique de miroir chauffant, de soudage par vibration linéaire ou par soudage par ultrasons ou par micro-ondes.

## Claims

1. A handling pallet comprising a platform (30) made of a plastic material such as polyethylene or polypropylene spaced apart from a support surface so as to allow a handling member such as a fork of a forklift to pass, and a spacer means (31) for spacing the platform from the support surface, the spacer means being made of plastic material such as polyethylene or polypropylene, the platform (30) and the spacer means (31) for spacing the platform from the support surface being made of a solid plastic material so as to leave no cavities in the event of breakage by means of a blunt instrument, characterised in that the spacer means (31) is secured to the platform (30) by a polyfusion process so that there remains no outwardly-opening cavities between the spacer means (31) and the platform (30), in that melting is performed so as to establish continuity between the organic chains of the two surfaces assembled together, and in that the connection zone comprises a peripheral bead (118) constituting a waterproof border around this zone.

2. The pallet according to claim 1, characterised in that the spacer means (31) comprises a plurality of blocks (33-35) directly secured to the bottom face (37) of the platform (30).

3. The pallet according to claim 1, characterised in that the spacer means (31) also includes a plurality of runners (40-42) each directly secured to a plurality of free ends of blocks (33-35).

4. The pallet according to claim 3, characterised in that the runners are disposed so as to constitute an uninterrupted belt (45).

5. The pallet according to one of claims 2 to 4, characterised in that blocks (33-35, 90, 94, 99) are each constituted by one of the following forms, on its own or in combination :
- a plane thick plate;
- a solid volume such as a solid cube;
- a curved plate with single concavity;
- a curved plate with ramifications.

6. The pallet according to one of the preceding claims, characterised in that it includes a stacking means such as the platform includes on its top face a means suitable for receiving a complementary means disposed on the bottom surface at the bottom of the spacer means of a pallet that is to be stacked on the pallet.

7. The pallet according to claim 6, characterised in that the stacking means disposed on the top surface of the platform is constituted by a plurality of projecting plates (54, 55) with gaps between them suitable for receiving corresponding portions of the stacking means or the bottom of the next spacer means.

8. The pallet according to claim 6, characterised in that the stacking means disposed on the top surface of the platform (73) is constituted by a plurality of depressions (75, 76, 77) within which corresponding end portions (78-80) of the stacking means on the bottom of the next spacer means are received.

9. The pallet according to claim 1, characterised in that the top surface (124) of the platform includes an embossing formed by a thermal printing process and/or a microperforation.

10. The pallet according to claims 6 to 9, characterised in that the stacking means includes an embossing formed on the bottom surface (123) of the bottom of the spacer means, which bottom embossing is adapted to retain the next pallet by the embossing on the top surface (124) of its platform (121), and is adapted to retain and prevent horizontal movements along both axes of the next pallet by the embossing.

11. A process for manufacturing a pallet according to anyone of claims 1 to 10, characterised in that it comprises the following steps :
- preparing individual components of a pallet from plates and/or bars made of plastic material by cutting, or by moulding;
- heating surface portions of said components until they melt, which portions are intended to be connected to similarly heated portions of other components;
- causing at least one first heated portion to face at least one second heated portion;
- applying predetermined pressure between the two components whose two respective heated portions have been caused to face each other; and
- cooling the heated portions while maintaining said pressure.

12. The process according to claim 11, characterised in that it further includes removing flash formed by applying pressure to the heated portions.

13. The process according to claim 11 or 12, characterised in that the temperature to which the surface portions are heated is comprised in the range from 100°C to 300°C.

14. The process according to anyone of claims 11 to 13, characterised in that the top surfaces of the plates (4-4f) are subjected, prior to the polyfusion, to a step of thermal printing of an embossing with a grid shape.

15. The process according to anyone of claims 11 to 14, characterised in that the plates (4-4f) undergo a step of microperforation.

16. The process according to anyone of claims 11 to 15, characterised in that the melting of the surface portions of the components is carrying out by applying a heating mirror technique, a linear vibration welding technique, or a technique of welding by ultrasound or by microwaves.

## Patentansprüche

1. Palette für den Ablauf von Arbeitsgängen mit einem Boden (30) aus einem Plastikmaterial wie Polyethylen oder Polypropylen der von einer Auflagefläche mit Abstand angeordnet ist um ein Greiforgan wie die Gabel eines Hubstaplers passieren zu lassen , und einem Abstandshaltemittel (31) bezüglich der Auflagefläche, aus einem Plastikmaterial wie Polyethylen oder Polypropylen, wobei der Boden (30) und das Abstandshaltemittel (31) bezüglich der Auflagefläche aus einem vollvolumigen Plastikmaterial hergestellt ist, derart, dass bei Bruch durch einen scharfen Gegenstand keine offenen Poren entstehen, dadurch gekennzeichnet, dass das Abstandshaltemittel (31) am Boden (30) durch einen Polyfusionsvorgang angebracht ist, wobei keinerlei, nach aussen hin offene Zwischenräume zwischen dem Boden (30) und dem Abstandshaltemittel (31) verbleiben, und dadurch, dass die Fusion derart durchgeführt wird, dass eine Kontinuierlichkeit der Molekularketten der beiden verbundenen Flächen entsteht, und wobei die Verbindungszone einen um diese herum verlaufenden peripherischen Wulst (118) aufweist, der einen dichten Rand bildet.

2. Palette nach Anspruch 1, dadurch gekennzeichnet, dass das Abstandshaltemittel (31) eine Mehrzahl von Blöcken (33-35) umfasst, welche direkt mit der unteren Fläche (37) des Bodens (30) verbunden sind.

3. Palette nach Anspruch 1, dadurch gekennzeichnet, dass das Abstandshaltemittel (31) auch eine Mehrzahl von Balken (40-42) aufweist, wovon jeder direkt mit einer Mehrzahl von freien Enden der Blöcke (33-35) verbunden ist.

4. Palette nach Anspruch 3, dadurch gekennzeichnet, dass die Balken derart angeordnet sind, dass sie einen kontinuirlichen Gürtel (45) bilden.

5. Palette nach einem der Ansprüche 2 - 4, dadurch gekennzeichnet, dass jeder der Blöcke (33-35, 90, 94, 99) eine oder eine Verbindung der folgenden Formen aufweist:
- flache dicke Platte;
- volles Volumen und massiv wie ein voller Würfel;
- gebogene Platte mit einfacher Höhlung;
- gebogene Platte mit Verzweigungen.

6. Palette nach einer der vorhergenden Ansprüche, dadurch gekennzeichnet, dass sie ein Passmittel aufweist, wobei beispielsweise der Boden auf seiner oberen Fläche Mittel aufweist um an der Unterfläche des Abstandshaltemittels einer Palette angebrachte Komplementärmittel zu empfangen, und welche zum Stapeln der Palette vorgesehen sind.

7. Palette nach Anspruch 6, dadurch gekennzeichnet dass die auf der oberen Fläche des Bodens angeordneten Passmittel durch eine Mehrzahl von herausstehenden Platten (54,55) gebildet sind, wobei die korrespondierenden Passmittel oder die Unterseite des folgenden Abstandshaltemittels in die Zwischenräume zwischen diesen heraustehenden Platten zu liegen kommen.

8. Palette nach Anspruch 6, dadurch gekennzeichnet, dass die auf der oberen Fläche des Bodens (73) angeorneten Passmittel durch eine Mehrzahl von Aushöhlungen (75,76,77) gebildet sind, in die entsprechende Endpartien (78-80) der Passmittel auf der Unterseite des folgenden Abstandshaltemittels zu liegen kommen.

9. Palette nach Anspruch 1, dadurch gekennzeichnet, die obere Fläche (124) des Bodens eine Waffelung aufweist, die durch ein thermisches Druckverfahren und/oder mittels Microperforation hergestellt wurde.

10. Palette nach Ansprüchen 6-9, dadurch gekennzeichnet, dass die Passmittel eine an der Unterseite (123) des Abstandhaltemittels angebrachte Waffelung aufweisen, welche Waffelung so adaptiert ist, dass sie eine Palette mittels der Waffelung an der Oberseite (124) ihres Bodens (121) festhalten kann, adaptiert zum Festhalten und zur Unterdrückung von Horizontalbewegungen entlang der beiden Achsen der folgenden Palette, entsprechend der Waffelung.

11. Verfahren zur Herstellung einer Palette nach irgendeinem der Ansprüche 1 - 10, dadurch gekennzeichnet, dass es folgende Verfahrensschritte aufweist:
- Zubereitung der einzelnen Elements der Palette aus Platten und/oder Barren aus Plastikmaterial durch Schneiden oder Giessen;
- Erwärmen bis zum Schmelzen von an andere, ebenfalls erwärmte, Partien anderer Elements zu bindende Oberflächenpartien von Elementen;
- Gegenüberstellen von zumindest einer ersten erwärmten Partie und zumindest einer zweiten erwärmten Partie;
- Aufbringen eines vorbestimmten Drucks zwischen den beiden Elementen von denen zwei erwärmte Partien einander gegenübergestellt wurden;
- Abkühlen der erwärmten Partien unter Beibehaltung des Drucks.

12. Verfahren nach Anspruch 11, dadurch gekennzeichnet, dass es die Entfernung von bei der Druckanwendung auf die erwärmten Partien entstandenen Graten umfasst.

13. Verfahren nach Anspruch 11 oder 12, dadurch gekennzeichnet, dass die Temperatur auf welche die Oberplächenpartien erwärmt werden, im Bereich von 100 - 300°C liegt.

14. Verfahren nach irgendeinem der Ansprüche 11 - 13, dadurch gekennzeichnet, dass die oberen Flächen der Platten (4 - 4f) vor der Polyfusion einem thermischen Druckverfahrensschritt zur Bildung einer Waffelung in Form eines Gitters unterworfen werden.

15. Verfahren nach irgendeinem der Ansprüche 11 - 14, dadurch gekennzeichnet, dass die Platten (4 - 4f) einer Microperforation unterworfen werden.

16. Verfahren nach irgendeinem der Ansprüche 11 - 15, dadurch gekennzeichnet, dass das Schmelzen der Oberflächenpartien der Elemente durch die Anwendung einer Heizspiegeltechnik, durch lineares Vibrationsschweissen, durch Ultraschallschweissen oder Microwellenschweissen erfolgt.
